# EUROPEAN PATENT APPLICATION

(11) **EP 4 623 660 A1**
(43) Date of publication of application: **01.10.2025**
(21) Application number: 25165267.3
(22) Date of filing: 21.03.2025
(51) Int. Cl.: A01B 69/04

(54) **AUTOMATED TRAVELING METHOD, AUTOMATED TRAVELING PROGRAM, AND AUTOMATED TRAVELING SYSTEM**

(30) Priority: 28.03.2024 JP 2024053089
(71) Applicant: Yanmar Holdings Co., Ltd., Osaka-shi, Osaka (JP)
(72) Inventor: MIYAKE, Koji, Okayama-shi (JP)
(74) Representative: Sekiguchi, Kazuya

(57) **Abstract**

A traveling processing portion 111 causes a work vehicle 10 including a work machine 14 movable between a non-work position and a work position to travel in an automated manner along a target path. An elevation processing portion 112 moves the work machine 14 from the non-work position to the work position at a position before a work start position only by a first predetermined distance on the target path. A car-speed control processing portion 113 reduces the car speed of the work vehicle 10 to a car speed slower than a set car-speed at a position before the work start position only by a second predetermined distance. A drive processing portion 114 starts driving of the work machine 14 at the work start position or a position on an advancing direction side of the work start position.

## Description

### TECHNICAL FIELD

The present invention relates to an automated traveling method, an automated traveling program, and an automated traveling system that cause a work vehicle to perform a work while being caused to perform automated traveling.

### BACKGROUND ART

Such a system is known that causes a work machine provided in a work vehicle to perform a predetermined work, while causing the work vehicle to perform the automated traveling along a target path in a field. For example, in a rice transplanter that performs planting of seedlings while performing automated traveling along a target path, such an art is known that a planting device is lowered onto a field surface before reaching a planting start position, thereby starting a planting operation before the planting start position (see, for example, Patent Document 1).

### PRIOR ART DOCUMENT

### PATENT DOCUMENT

Patent Document 1: Japanese Patent No. 7249965

### SUMMARY OF INVENTION

### TECHNICAL PROBLEM

However, when the work device (planting device) is driven from a position a predetermined distance before a work start position (planting start position) set in, there is a possibility that the work cannot be correctly started at the work start position due to variation in a stop position of the work device and delay in the start of driving caused by rattling of a drive transmission system due to aging deterioration. In this case, the position at which the work is actually started varies with respect to the work start position, and such a problem occurs that the work accuracy lowers.

An object of the present invention is to provide an automated traveling method, an automated traveling program, and an automated traveling system capable of improving work accuracy in a work vehicle that performs a work while traveling in an automated manner.

### SOLUTION TO PROBLEM

An automated traveling method according to the present invention executes: causing a work vehicle including a work machine movable between a non-work position and a work position to travel in an automated manner along a target path; causing the work machine to move from the non-work position to the work position at a position before a work start position only by a first predetermined distance on the target path; causing a car speed of the work vehicle to be reduced to a car speed slower than a set car-speed set in advance at a position before the work start position only by a second predetermined distance; and causing driving of the work machine to be started at the work start position or a position on an advancing direction side of the work start position.

In addition, an automated traveling method according to the present invention executes: causing a work vehicle including a work machine movable between a non-work position and a work position to travel in an automated manner along a target path; reducing a car speed of the work vehicle to a car speed slower than a set car-speed set in advance at a position before a work start position by a predetermined distance on the target path; and by engaging a work clutch that transmits power to the work machine at a point of time when the car speed after the deceleration reaches a threshold value, causing an operation of the work machine to be started after a predetermined time elapses from the point of time.

**In** addition, an automated traveling program according to the present invention is a program for causing one or more processors to cause a work vehicle including a work machine movable between a non-work position and a work position to travel in an automated manner along a target path, for causing the work machine to move from the non-work position to the work position at a position before a work start position only by a first predetermined distance on the target path, for causing a car speed of the work vehicle to be reduced to a car speed slower than a set car-speed set in advance at a position before the work start position only by a second predetermined distance, and for causing driving of the work machine to be started at the work start position or a position on an advancing direction side of the work start position.

In addition, an automated traveling system according to the present invention includes a traveling processing portion, an elevation processing portion, a car-speed control processing portion, and a drive processing portion. The traveling processing portion causes a work vehicle including a work machine movable between a non-work position and a work position to travel in an automated manner along a target path. The elevation processing portion causes the work machine to move from the non-work position to the work position at a position before a work start position only by a first predetermined distance on the target path. The car-speed control processing portion causes the car speed of the work vehicle to be reduced to a car speed slower than a set car-speed set in advance at a position before the work start position only by a second predetermined distance. The drive processing portion causes driving of the work machine to be started at the work start position or a position on an advancing direction side of the work start position.

### ADVANTAGEOUS EFFECTS OF INVENTION

According to the present invention, it is possible to provide an automated traveling method, an automated traveling program, and an automated traveling system capable of improving work accuracy in a work vehicle that performs a work while traveling in an automated manner.

### BRIEF DESCRIPTION OF DRAWINGS

FIG. 1 is a block diagram illustrating a configuration of an automated traveling system according to an Embodiment of the present invention;
FIG. 2A is a side view illustrating an example of a work vehicle (rice transplanter) according to the Embodiment of the present invention;
FIG. 2B is an upper view illustrating an example of a work vehicle (rice transplanter) according to the Embodiment of the present invention;
FIG. 2C is a plan view illustrating a schematic configuration of a power transmission mechanism of a work vehicle (rice transplanter) according to the Embodiment of the present invention;
FIG. 3 is a diagram illustrating an example of a field and a target path according to the Embodiment of the present invention;
FIGS. 4A to 4D are schematic diagrams, each illustrating an example of a traveling method of the work vehicle according to the Embodiment of the present invention;
FIG. 5 is a diagram illustrating an example of operation timing of each processing executed in the work vehicle according to the Embodiment of the present invention;
FIG. 6 is a diagram illustrating another example of operation timing of each processing executed in the work vehicle according to the Embodiment of the present invention;
FIG. 7 is a diagram illustrating another example of an operation timing of each processing that is executed in the work vehicle according to the Embodiment of the present invention;
FIG. 8 is a diagram illustrating another example of operation timing of each processing executed in the work vehicle according to the Embodiment of the present invention;
FIG. 9 is a diagram illustrating an example of a menu screen displayed on an operation terminal according to the Embodiment of the present invention;
FIG. 10 is a flowchart illustrating an example of a procedure of automated traveling processing executed by the automated traveling system according to the Embodiment of the present invention; and
FIG. 11 is a diagram illustrating an example of a work-setting screen displayed on the operation terminal according to the Embodiment of the present invention.

### DESCRIPTION OF EMBODIMENTS

The following Embodiment is an example embodying the present invention, and is not intended to limit the technical scope of the present invention.

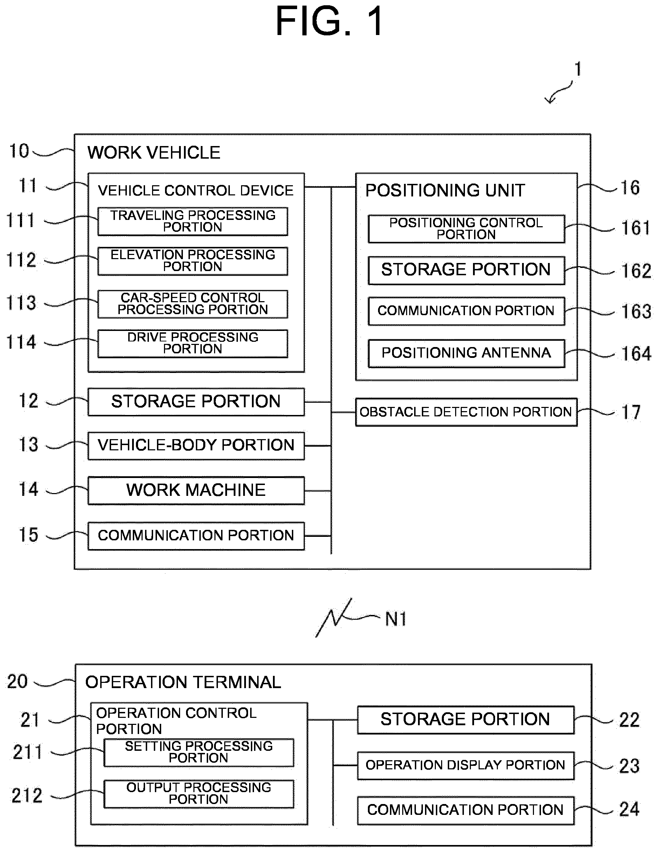

As shown in FIG. 1, an automated traveling system 1 according to an Embodiment of the present invention includes a work vehicle 10 and an operation terminal 20. The work vehicle 10 and the operation terminal 20 can communicate with each other via a communication network N1. For example, the work vehicle 10 and the operation terminal 20 can communicate with each other via a mobile-phone line network, a packet line network, or a wireless local area network (LAN).

In this Embodiment, a case in which the work vehicle 10 is a rice transplanter will be described as an example. Note that, as other embodiments, the work vehicle 10 may be a tractor, a combine harvester, a construction machine, a snowplow or the like. The work vehicle 10 is an automated traveling vehicle including a configuration capable of automated traveling (autonomous traveling) within a previously registered field. For example, an operator (user) registers a field, which is a work target, and sets a traveling path (target path) along which the work vehicle 10 travels in an automated manner in the field. The work vehicle 10 travels in the automated manner along the target path set in advance for the field on the basis of positional information about a current position of the work vehicle 10, which is calculated by a positioning unit 16. In addition, the work vehicle 10 can perform a predetermined work (planting work, for example) while traveling in the automated manner in the field.

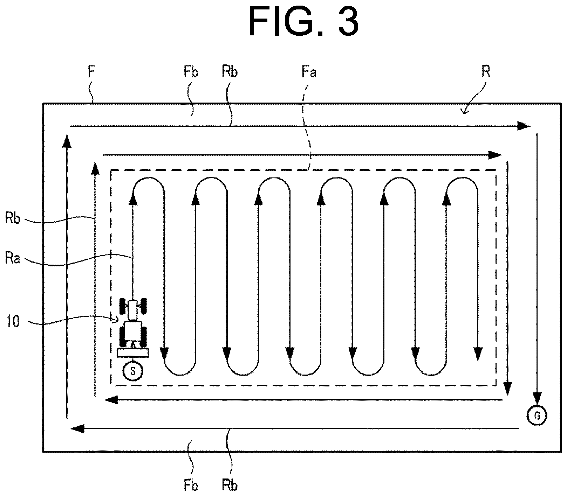

For example, the work vehicle 10 travels in the automated manner along a target path R in a field F shown in FIG. 3. The field F shown in FIG. 3 includes an inner area Fa and a headland area Fb (outer area). In the field F, the target path R including a plurality of work paths is set in advance. For example, a work path Ra for traveling back and forth in a parallel manner from a traveling start position S is set for the inner area Fa, and a work path Rb for traveling in a spiral manner (circulating and traveling) around the outer periphery toward a traveling end position G is set for the headland area Fb.

The work vehicle 10 starts automated traveling from the traveling start position S and performs a work while traveling back and forth along the work path Ra in the inner area Fa. In addition, the work vehicle 10 performs a work in the headland area Fb, while circulating and traveling to a traveling end position G along the work path Rb.

Here, the work path Rb in the headland area Fb is set on the basis of the number of work processes. FIG. 3 illustrates the work path Rb when the number of work processes is two, but the number of work processes of the work path Rb may be one. In the work path Rb shown in FIG. 3, the work vehicle 10 performs a work, while circulating and traveling only two laps in the headland area Fb. A width of the headland area Fb is set to a width corresponding to the number of work processes. Therefore, when the number of work processes is two, the width of the headland area Fb is substantially twice the work width of the work vehicle 10.

The target path R is not limited to the path illustrated in FIG. 3, and is set as appropriate according to a shape of the field F, a content of the work, and the like. For example, the target path R is set as appropriate in accordance with the number of work processes in the headland area Fb or the width of the headland area Fb.

In the prior art in which the work device (planting device) is driven before a work start position (planting start position) set in advance by a predetermined distance, there is a concern that a work cannot be started properly at the work start position due to variation in a stop position of the work device, delay in the start of driving caused by rattling of a drive transmission system due to aging degradation or the like. In this case, the position at which the work is actually started varies with respect to the work start position, and such a problem occurs that the work accuracy lowers. On the other hand, in the automated traveling system 1 according to this Embodiment, as will be described below, it is possible to improve the work accuracy in the work vehicle 10 performing a work while traveling in the automated manner. Hereinafter, specific configurations of the work vehicle 10 and the operation terminal 20 will be explained.

### Work Vehicle 10

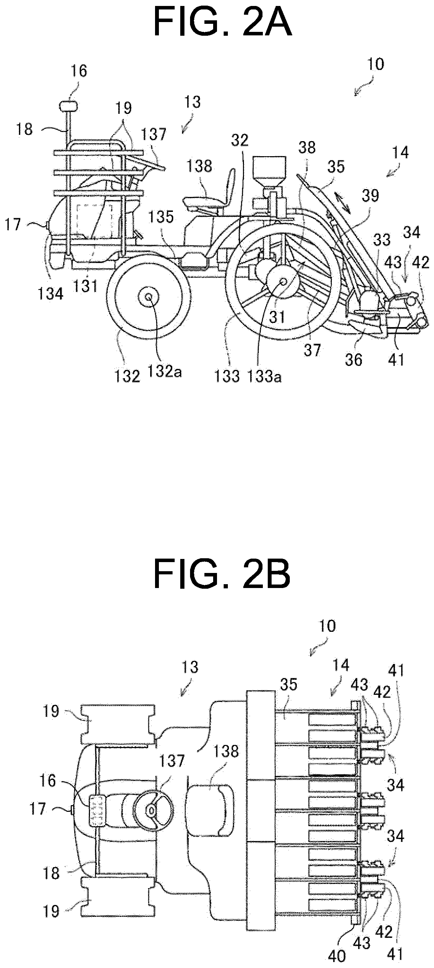

As shown in FIGS. 1, 2A, and 2B, the work vehicle 10 includes a vehicle control device 11, a storage portion 12, a vehicle-body portion 13, a work machine 14, a communication portion 15, the positioning unit 16, an obstacle detection portion 17, and the like. The vehicle control device 11 is electrically connected to the storage portion 12, the vehicle-body portion 13, the work machine 14, the positioning unit 16, the obstacle detection portion 17, and the like. Note that the vehicle control device 11 and the positioning unit 16 may be capable of wireless communication.

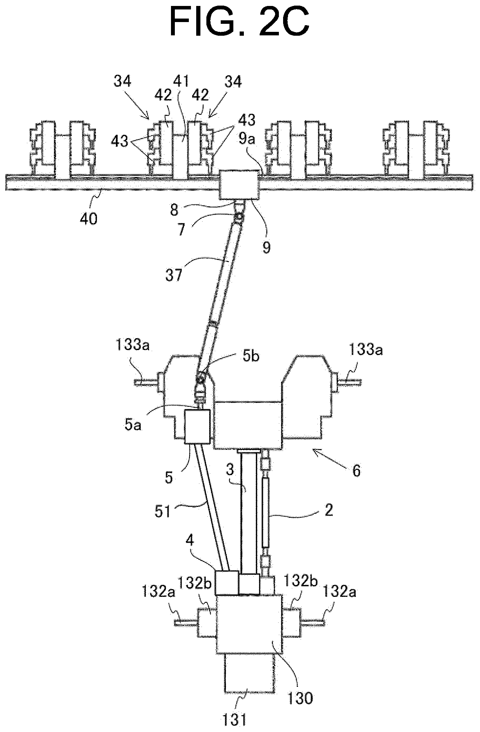

First, a rice transplanter, which is an example of the work vehicle 10, will be explained with reference to FIG. 2A to FIG. 2C. FIG. 2A is a side view of the work vehicle 10 (rice transplanter), FIG. 2B is a plan view of the work vehicle 10, and FIG. 2C is a plan view illustrating a schematic configuration of a power transmission mechanism of the work vehicle 10. The work vehicle 10 includes the vehicle-body portion 13, a pair of left and right front wheels 132, a pair of left and right rear wheels 133, the work machine 14 (planting portion) and the like.

An engine (drive portion) 131 is disposed inside a hood 134 disposed on a front portion of the vehicle-body portion 13. The power generated by the engine 131 is transmitted to the front wheels 132 and the rear wheels 133 via a transmission case 135. The power, which has been transmitted via the transmission case 135, is also transmitted to the work machine 14 via a PTO shaft 37 disposed in a rear part of the vehicle-body portion 13. Note that it is constituted such that the power is transmitted to the PTO shaft 37 via a planting clutch 5 (work clutch, PTO clutch) (see FIG. 2C). At a position between the front wheels 132 and the rear wheels 133 in the front-rear direction of the vehicle-body portion 13, a driver's seat 138 the operator boards is provided.

In front of the driver's seat 138, operation tools such as a steering wheel 137, a main gear shift lever (not shown) and a planting clutch lever (not shown) are disposed. The steering wheel 137 is an operation tool for changing a steering angle of the work vehicle 10. The main gear shift lever is constituted capable of selecting positions including at least "forward", "backward", "neutral" and "seedling transfer". When the main gear shift lever is operated to the "forward" position, the power is transmitted so that the front wheels 132 and the rear wheels 133 rotate in a direction that causes the work vehicle 10 to move forward. When the main gear shift lever is operated to the "backward" position, the power is driven so that the front wheels 132 and the rear wheels 133 rotate in a direction that causes the work vehicle 10 to move backward. When the main gear shift lever is operated to the "neutral" position, transmission of the power to the front wheels 132 and the rear wheels 133 is shut off. When the main gear shift lever is operated to the "seedling transfer" position, the transmission of power to the front wheels 132, the rear wheels 133, and the PTO shaft 37 is shut off. In addition, when the planting clutch lever is operated to an "ON" position, a transmitted state that the planting clutch 5 transmits the power to the PTO shaft 37 (that is, the work machine 14) is brought about, while when the planting clutch lever is operated to an "OFF" position, a shut-off state that the planting clutch 5 does not transmit the power to the PTO shaft 37 is brought about. That is, when the planting clutch lever is set to the "ON" position, the driving of the work machine 14 is started, and the planting operation is started. In addition, when the planting clutch lever is set to the "OFF" position, the driving of the work machine 14 is stopped, and the planting operation is stopped.

Note that, in this Embodiment, the vehicle control device 11 switches "ON" and "OFF" of the planting clutch 5. When the vehicle control device 11 sets the planting clutch 5 to "ON", the driving of the work machine 14 is started, and the planting operation is started. In addition, when the vehicle control device 11 sets the planting clutch 5 to "OFF", the driving of the work machine 14 is stopped, and the planting operation is stopped. The vehicle control device 11 only needs to switch "ON" and "OFF" of the planting clutch 5 as internal processing, and the position of the planting clutch lever does not have to be moved.

The work machine 14 is connected to the rear of the vehicle-body portion 13 via an elevation link mechanism 31. The elevation link mechanism 31 is constituted by a parallel link structure including a top link 39, a lower link 38 and the like. An elevation cylinder (elevating device) 32 is connected to the lower link 38. The entire work machine 14 can be elevated up and down by extending / contracting the elevation cylinder 32. As a result, a height of the work machine 14 can be changed between a work position (work height) at which the work machine 14 is lowered to perform the planting work and a non-work position (non-work height) at which the work machine 14 is raised and does not perform the planting work. Note that the elevation cylinder 32 is a hydraulic cylinder, but an electric cylinder may also be used. In addition, a configuration may be such that the work machine 14 is elevated up / down by an actuator other than the cylinder.

The work machine 14 (planting portion) includes a planting input case 33, a plurality of planting units 34, a seedling stand 35, a plurality of floats 36 and the like.

Each of the planting units 34 includes a planting transmission case 41 and a rotary case 42. The power is transmitted to the planting transmission case 41 via the PTO shaft 37 and the planting input case 33. Each of the planting transmission cases 41 has the rotary cases 42 mounted on both sides thereof in a car width direction. Two planting claws 43 are mounted on each of the rotary cases 42 by being aligned in the advancing direction of the work vehicle 10. These two planting claws 43 perform planting of a single row.

As shown in FIG. 2A, the seedling stand 35 is disposed in front of and above the planting unit 34 and is constituted such that seedling mats can be placed thereon. The seedling stand 35 is constituted to be laterally movable (slidable in the lateral direction) in a reciprocating manner. In addition, the seedling stand 35 is constituted capable of intermittently and vertically conveying the seedling mats downward at the ends of the reciprocating movement of the seedling stand 35. This configuration enables the seedling stand 35 to supply seedlings from the seedling mats to each of the planting units 34. Accordingly, the work vehicle 10 can sequentially supply seedlings to each of the planting units 34 and continuously perform planting of the seedlings.

The float 36 shown in FIG. 2A is provided in a lower part of the work machine 14 and is disposed so that the lower surface thereof can be brought into contact with the ground. When the float 36 comes into contact with the ground, the paddy field surface before seedlings are planted is levelled. In addition, the float 36 has a float sensor (not shown) that detects a swing angle of the float 36 provided. The swing angle of the float 36 corresponds to a distance between the paddy field surface and the work machine 14. The work vehicle 10 causes the elevation cylinder 32 to operate on the basis of the swing angle of the float 36 and elevates the work machine 14 up and down so as to maintain a height of the work machine 14 from the ground constant.

As shown in FIG. 2C, a transmission 130 is disposed in the rear of the engine 131. Front axles 132b are disposed on the left and right of the transmission 130, and the front wheels 132 (see FIG. 2A) are mounted on a front wheel shafts 132a provided on the front axles 132b and are driven by the driving force transmitted from the transmission 130. A rear axle 6 is disposed in the rear of the transmission 130 via a joint member 3, and a rear-wheel drive shaft 2 is disposed along the joint member 3. The rear-wheel drive shaft 2 transmits the driving force from the transmission 130 to the rear axle 6. The rear wheels 133 (see FIG. 2A) are mounted on rear wheel shafts 133a provided on the rear axle 6 and are driven by the driving force transmitted from the transmission 130 via the rear-wheel drive shaft 2.

In the rear of the transmission 130, the planting clutch 5 is disposed via a joint member 51. Regarding the driving force transmitted from the transmission 130 via the joint member 51, a force transmission state is switched to either one of a connected state ("ON") and a shut-off state ("OFF") by the planting clutch 5. The PTO shaft 37 is connected to a universal joint 7, and the universal joint 7 is connected to an input shaft 8 of a center case 9. An output shaft 9a of the center case 9 is disposed along a guide rail 40. Planting transmission cases 41 are disposed at substantially equal intervals at a plurality of locations (four locations as an example in this Embodiment) in the left-right direction behind the guide rail 40. The planting transmission case 41 is connected to the output shaft 9a of the center case 9. A pair of planting units 34 are disposed on left and right of the planting transmission case 41. The driving force generated by the motor is transmitted to the planting units 34 via the PTO shaft 37, the center case 9, and the planting transmission case 41.

A spare seedling stand 19 is disposed outside in the car width direction of the hood 134 and is capable of loading a seedling box accommodating spare mat seedlings. The upper parts of the pair of left and right spare seedling stands 19 are connected to each other by a connecting frame 18 that extends in the up-down direction and the vehicle width direction. The positioning unit 16 is disposed at the center in the car width direction of the connecting frame 18.

The positioning unit 16 is a communication device including a positioning control portion 161, a storage portion 162, a communication portion 163, a positioning antenna 164 (see FIG. 1) and the like. For example, the positioning unit 16 is provided at an upper center in the front of the work vehicle 10 as shown in FIG. 2A and FIG. 2B. An installation spot of the positioning unit 16 is not limited. In addition, the positioning control portion 161, the storage portion 162, the communication portion 163, and the positioning antenna 164 of the positioning unit 16 may be disposed in a distributed manner at different positions in the work vehicle 10. Note that a battery is connected to the positioning unit 16, and the positioning unit 16 can be operated even while the engine 131 is stopped. In addition, as the positioning unit 16, a mobile phone terminal, a smartphone, a tablet terminal, a quantum compass or the like may be used, for example.

The positioning control portion 161 is a computer system that includes one or more processors and storage memories such as a non-volatile memory and a RAM. The storage portion 162 is a non-volatile memory or the like that stores a program for causing the positioning control portion 161 to execute positioning processing and data such as positioning information and movement information. For example, the program is non-temporarily recorded in a computer-readable recording medium such as a CD, a DVD or the like, read by a predetermined reading device (not shown), and stored in the storage portion 162. Note that the above-described program may be downloaded from a server (not shown) to the positioning unit 16 via the communication network N1 and stored in the storage portion 162.

The communication portion 163 is a communication interface for connecting the positioning unit 16 to the communication network N1 in a wired or wireless manner, and for executing data communication with the external devices such as a base station server via the communication network N1 in compliance with a predetermined communication protocol.

The positioning antenna 164 is an antenna that receives a radio wave (GNSS signal) transmitted from a satellite.

The positioning control portion 161 calculates the current position of the work vehicle 10 on the basis of a GNSS signal received from a satellite by the positioning antenna 164. For example, in a case where the work vehicle 10 automatedly travels in the field F, when the positioning antenna 164 receives radio waves (transmission time, orbital information and the like) transmitted from each of a plurality of satellites, the positioning control portion 161 calculates the distance between the positioning antenna 164 and the respective satellites and calculates the current position (latitude and longitude) of the work vehicle 10 on the basis of the calculated distance. In addition, the positioning control portion 161 may perform positioning by a real-time kinematic method (RTK-GNSS positioning method (RTK method)) which utilizes correction information corresponding to a base station (reference station) near the work vehicle 10 to calculate the current position of the work vehicle 10. As described above, the work vehicle 10 performs automated traveling using positioning information by the RTK method. Note that the current position of the work vehicle 10 may be the same position as the positioning position (for example, the position of the positioning antenna 164), or may be a position shifted from the positioning position (for example, the planting operation position of the planting unit 34). Note that the positioning control portion 161 may use a quantum compass to perform calculation (positioning) of the current position of the work vehicle 10.

The obstacle detection portion 17 is provided in front of the vehicle-body portion 13. The obstacle detection portion 17 is constituted by a sensor that detects obstacles in a predetermined detection area by using infrared rays, ultrasonic waves or the like, for example. For example, the obstacle detection portion 17 may be a lidar sensor (distance sensor) that can measure the distance to the measurement target (obstacle) in three dimensions by using a laser or may be a sonar sensor including a plurality of sonars that can measure the distance to the measurement target by using ultrasonic waves. The obstacle described above is, for example, a mound, a water intake, an electric pole, materials temporarily placed in the field F, people and the like. Upon detection of the above-described obstacle, the obstacle detection portion 17 transmits a detection result (measurement information) to the vehicle control device 11. The vehicle control device 11 decelerates or stops the work vehicle 10, when the obstacle detection portion 17 detects an obstacle in a detection area. Note that the obstacle detection portion 17 may be provided in the front, the rear, a left side, and a right side, respectively. In this case, the vehicle control device 11 controls the traveling of the work vehicle 10 on the basis of the detection result of each of the obstacle detection portions 17.

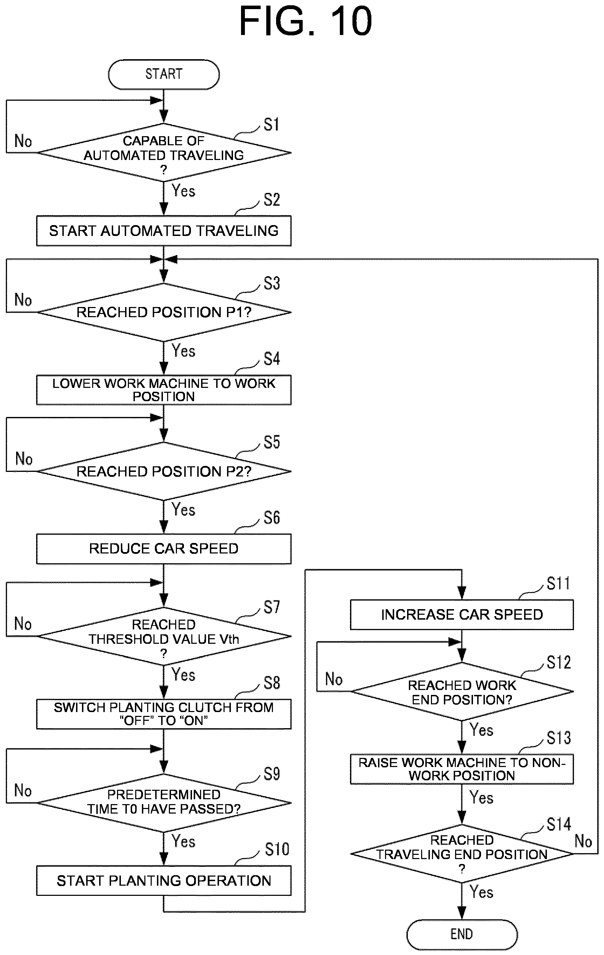

The storage portion 12 is a non-volatile storage portion such as a hard disk drive (HDD), a solid state drive (SSD) or a flash memory or the like that stores various types of information. The storage portion 12 stores a control program such as an automated traveling program for causing the vehicle control device 11 to execute automated traveling processing (see FIG. 10) described below. For example, the above-described automated traveling program is recorded in a non-transitory manner in a computer-readable recording medium such as a flash ROM, an EEPROM, a CD, a DVD or the like, and is read by a predetermined reading device (not shown) and stored in the storage portion 12. Note that the above-described automated traveling program may be downloaded from a server (not shown) to the work vehicle 10 via the communication network N1 and stored in the storage portion 12. In addition, the storage portion 12 may store path data of the target path R generated in the operation terminal 20.

The vehicle control device 11 has control devices such as a CPU, a ROM, and a RAM. The above-described CPU is a processor that executes various types of arithmetic processing. The above-described ROM is a non-volatile storage portion that stores, in advance, control programs such as a BIOS and an OS for causing the above-described CPU to execute the various types of arithmetic processing. The above-described RAM is a volatile or non-volatile storage portion that stores various types of information and is used as a temporary storage memory (work area) for various types of processing executed by the above-described CPU. The vehicle control device 11 controls the work vehicle 10 by causing the above-described CPU to execute various types of control programs stored in advance in the above-described ROM or storage portion 12.

The vehicle control device 11 controls the operation of the work vehicle 10 in accordance with various types of user operations to the work vehicle 10. In addition, the vehicle control device 11 executes automated traveling processing of the work vehicle 10 on the basis of the current position of the work vehicle 10 calculated by the positioning unit 16 and the target path R set in advance.

As shown in FIG. 1, the vehicle control device 11 includes various processing portions such as a traveling processing portion 111, an elevation processing portion 112, a car-speed control processing portion 113, and a drive processing portion 114. Note that the vehicle control device 11 causes the above-described CPU to execute various types of processing according to the automated traveling program to function as the various processing portions. In addition, some or all of the above-described processing portions may be constituted by electronic circuits. Note that the above-described automated traveling program may be a program for causing a plurality of processors to function as the above-described processing portions.

The traveling processing portion 111 controls the traveling of the work vehicle 10. Specifically, the traveling processing portion 111 causes the work vehicle 10 to travel in the automated manner along the target path R set in the field F. For example, the traveling processing portion 111 starts automated traveling of the work vehicle 10, when a traveling start instruction is acquired from the operation terminal 20. For example, when the operator presses a start button on an operation screen of the operation terminal 20 in a case where the current position of the work vehicle 10 is the position that satisfies a traveling start condition, the operation terminal 20 outputs a traveling start instruction to the work vehicle 10. When the traveling processing portion 111 acquires the traveling start instruction from the operation terminal 20, it causes the work vehicle 10 to start the automated traveling along the target path R. For example, the traveling processing portion 111 causes the work vehicle 10 to perform straight traveling from a start end to a terminal end of each work path and to perform turning traveling from the start end to the terminal end of each turning path.

In addition, when the traveling processing portion 111 acquires a traveling stop instruction from the operation terminal 20, the traveling processing portion 111 causes the work vehicle 10 to stop the automated traveling. For example, when the operator presses a temporary stop button on the operation screen of the operation terminal 20, the operation terminal 20 outputs a traveling stop instruction to the work vehicle 10.

In addition, the traveling processing portion 111 controls the traveling of the work vehicle 10 on the basis of a detection result by the obstacle detection portion 17. Specifically, when the obstacle detection portion 17 detects an obstacle, the traveling processing portion 111 decelerates or stops the work vehicle 10. Furthermore, the traveling processing portion 111 may also cause the work vehicle 10 to perform avoidance traveling to avoid the obstacle.

The elevation processing portion 112 controls a position (attitude) of the work machine 14. Specifically, the elevation processing portion 112 changes the height of the work machine 14 between the work position (work height) at which the work machine 14 is lowered to perform the planting work and the non-work position (non-work height) at which the work machine 14 is raised and does not perform the planting work. In addition, the elevation processing portion 112 lowers the work machine 14 to the work position, when a paddy field is to be leveled by the float 36 (see FIG. 2A). The elevation processing portion 112 elevates the work machine 14 up and down by inputting a control signal to the elevation cylinder 32 so as to extend and contract the elevation cylinder 32.

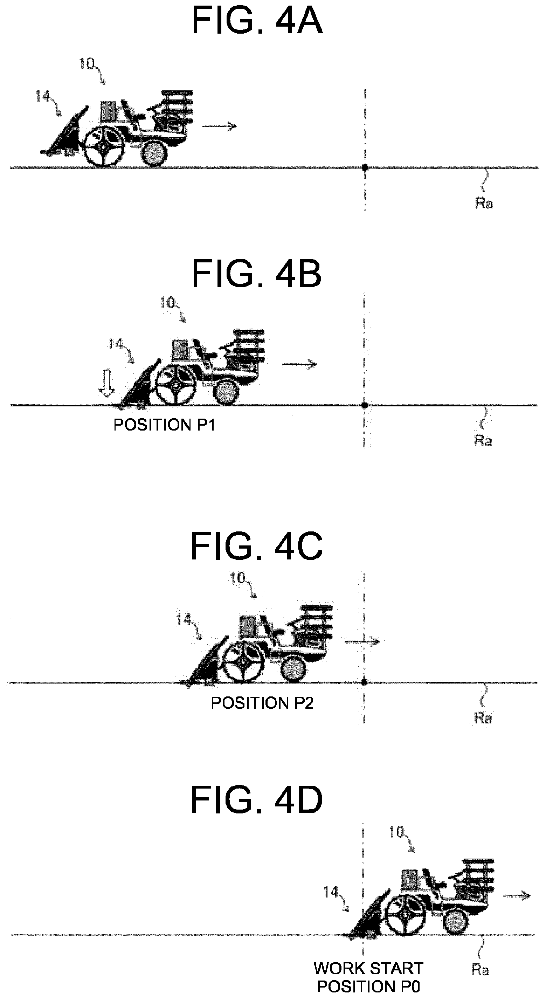

In addition, the elevation processing portion 112 controls the elevation of the work machine 14 on the basis of the position information of the work vehicle 10. Specifically, the elevation processing portion 112 lowers the work machine 14 from the non-work position to the work position at a position before the work start position only by a first predetermined distance on the target path R. For example, as shown in FIG. 4A, the work vehicle 10 performs the automated traveling with the work machine 14 maintained at the non-work position, when the automated traveling is started at a traveling start position S (see FIG. 3). Thereafter, when the work vehicle 10 reaches a position P1 on the work path Ra, which is before the work start position P0 only by the first predetermined distance (see FIG. 4B), the elevation processing portion 112 lowers the work machine 14 from the non-work position to the work position. When the work machine 14 moves to the work position, the float 36 comes into contact with the ground, and when the traveling processing portion 111 causes the work vehicle 10 to automatedly travel in this state, the paddy field can be leveled by the float 36. Note that, at this time, since the driving of the work machine 14 is stopped, the planting operation is not performed.

The car-speed control processing portion 113 controls the car speed of the work vehicle 10 during the automated traveling. Specifically, the car-speed control processing portion 113 switches the car speed of the work vehicle 10 on the basis of setting information set in advance in the operation terminal 20. For example, when the operator sets the car speed for straight traveling and the car speed for turning traveling in the operation terminal 20, the car-speed control processing portion 113 switches the car speed (set car-speed) of the work vehicle 10 in accordance with the traveling path (straight traveling path, turning traveling path or the like). For example, the car-speed control processing portion 113 switches to a set car-speed for the straight traveling path, when the work vehicle 10 travels on a straight traveling path, and switches to a set car-speed for the turning traveling, when the work vehicle 10 travels on a turning traveling path.

In addition, the car-speed control processing portion 113 changes the set car-speed of the work vehicle 10 on the basis of the work start position on the target path R. Specifically, the car-speed control processing portion 113 reduces the car speed of the work vehicle 10 to a car speed slower than the set car-speed set in advance at a position before the work start position only by a second predetermined distance. For example, as shown in FIGS. 4A to 4D, when the work vehicle 10 is performing the automated traveling at the set car-speed for the straight traveling in the state in which the work machine 14 is maintained at the work position (see FIG. 4B) and then, the work vehicle 10 reaches a position P2 before the work start position P0 on the work path Ra only by the second predetermined distance (see FIG. 4C), the car-speed control processing portion 113 reduces the car speed of the work vehicle 10 to a car speed slower than the set car-speed. As a result, the work vehicle 10 can level the paddy field by the float 36, while traveling at a low speed. Note that, at this point of time, too, since the driving of the work machine 14 is stopped, the planting operation is not performed. When the car-speed control processing portion 113 reduces the car speed to 0m/s, the work vehicle 10 stops. The car-speed control processing portion 113 may continuously (steplessly) or in a stepwise manner reduces the car speed from the set car-speed.

As described above, by adopting such a configuration that the car speed is reduced after the work machine 14 lowers to the work position, that is, a configuration that the distance from the work start position P0 to the position P1 (first predetermined distance of the present invention) is made longer than the distance from the work start position P0 to the position P2 (second predetermined distance of the present invention), the attitude of the work machine 14 does not change, while the work vehicle 10 is decelerating and thus, traveling stability of the work vehicle 10 can be improved. Note that, as another Embodiment, the car-speed control processing portion 113 may cause the car speed to be reduced in a state in which the work machine 14 is at the non-work position. That is, lowering of the work machine 14 may be started after the reduction of the car speed of the work vehicle 10 is started. However, in this case, it is desirable to secure a long deceleration period in consideration of the traveling stability of the work vehicle 10. In addition, as another Embodiment, the timing at which the deceleration of the car speed of the work vehicle 10 is started and the timing at which the lowering of the work machine 14 is started may be matched to each other.

The drive processing portion 114 controls the driving of the work machine 14. Specifically, the drive processing portion 114 starts the driving of the work machine 14 so as to start the planting operation (the operation of planting seedlings on the paddy field by the planting unit 34). Specifically, the drive processing portion 114 switches "ON" and "OFF" of the planting clutch 5 so as to switch driving and stopping of the work machine 14. For example, the drive processing portion 114 sets the planting clutch 5 to "ON", starts driving of the work machine 14, and causes the planting unit 34 to start the planting operation. In addition, the drive processing portion 114 sets the planting clutch 5 to "OFF", stops the driving of the work machine 14, and causes the planting unit 34 to stop the planting operation.

In addition, the drive processing portion 114 starts driving of the work machine 14 at the work start position P0. Specifically, the drive processing portion 114 controls the timing at which the planting clutch 5 is engaged so that the planting operation of the planting unit 34 is started, when the work vehicle 10 reaches the work start position P0, that is, when the planting unit 34 reaches the work start position P0 (see FIG. 4D).

Note that, since the distance between the positioning antenna 164 and the planting unit 34 is a fixed value in the work vehicle 10, the drive processing portion 114 can calculate the position of the planting unit 34 by acquiring the position of the positioning antenna 164.

Here, a predetermined time T0 (time lag) is required from when the planting clutch 5 is switched from "OFF" to "ON" until the driving of the work machine 14 (planting unit 34) is started. The predetermined time T0 (time lag) includes a structural delay time, a delay time due to aging deterioration, and the like. For example, the structural delay time is a time period specific to the work machine 14 and varies depending on an individual difference of the work machine 14. In addition, the delay time due to aging deterioration becomes longer in accordance with a length of the operation period of the work machine 14.

In this Embodiment, the driving of the work machine 14 is started at a point of time when the predetermined time T0 (time lag) has elapsed since the drive processing portion 114 engaged the planting clutch 5. Therefore, in order to start the driving (the planting operation) at the point of time when the planting unit 34 reaches the work start position P0, the drive processing portion 114 only needs to engage the planting clutch 5 at a point of time before the time when the planting unit 34 reaches the work start position P0 only by the predetermined time T0. However, when soil is not in a good condition, for example, the wheels of the work vehicle 10 may slip and may not be able to travel the distance that it should travel in some c cases. When the slip occurs, for example, the planting unit 34 cannot reach the work start position P0 at the point of time when the predetermined time T0 has elapsed, and such a problem occurs that the planting operation is started before the work start position P0.

A degree of the slip (slip rate) is correlated with the car speed, and there is a tendency that the faster the car speed is, the more likely the slip occurs and the shorter a traveling distance becomes, while the slower the car speed is, the less likely the slip occurs and the longer the traveling distance becomes. Therefore, it is possible to calculate the traveling distance of the work vehicle 10 from the slip rate on the basis of the car speed.

Thus, the drive processing portion 114 engages the planting clutch 5 at a first point of time when the car speed after the deceleration reaches a threshold value Vth, thereby starting the drive of the work machine 14 after the predetermined time T0 has elapsed from the first point of time. For example, the drive processing portion 114 engages the planting clutch 5 at the point of time when the car speed of the work vehicle 10 is gradually reduced from the set car-speed from the position P2 and reaches a certain speed (threshold value Vth). When the planting clutch 5 is switched from "OFF" to "ON", a transmission state in which power is transmitted to the PTO shaft 37 is brought about, and the driving of the work machine 14 (planting unit 34) is started after the predetermined time T0 (time lag) has elapsed. In addition, the drive processing portion 114 sets the threshold value Vth on the basis of the predetermined time T0. For example, the drive processing portion 114 sets the threshold value Vth such that the position of the work vehicle 10 after the predetermined time T0 has elapsed matches the work start position P0 or is within a predetermined range from the work start position P0.

As another Embodiment, the drive processing portion 114 may set the threshold value Vth in accordance with a setting operation by the operator. Note that the drive processing portion 114 may set a lower limit value and an upper limit value of the threshold value Vth that can be set by the operator. For example, the lower limit value and the upper limit value may be set in accordance with the predetermined time T0. Note that an unspecified number of users may be allowed to perform the setting operation of the threshold value Vth or only a predetermined user having an operation authority may be allowed.

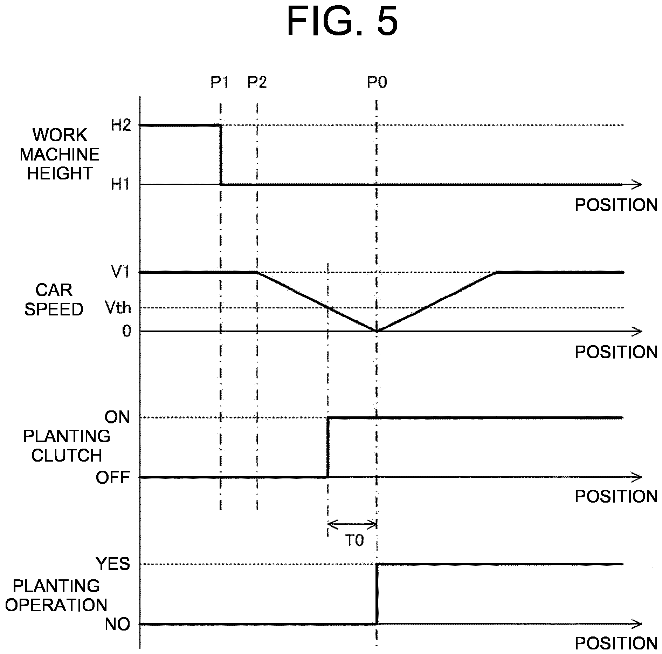

FIG. 5 illustrates an example of the control timing of each processing portion of the vehicle control device 11. For example, when the work vehicle 10 that has started the automated traveling travels straight toward the work path Ra and reaches the position P1 (see FIG. 4B), the elevation processing portion 112 lowers the work machine 14 from a non-work position H2 to a work position H1. When the work machine 14 moves to the work position H1, the float 36 comes into contact with the ground. Thereafter, when the work vehicle 10 continues the automated traveling, while leveling the ground by the float 36, and reaches the position P2 (see FIG. 4C), the car-speed control processing portion 113 reduces a set car-speed V1 (1.8 m/s, for example) for the straight traveling. For example, the car-speed control processing portion 113 gradually reduces the set car-speed V1 until the car speed reaches 0 m/s. In addition, the car-speed control processing portion 113 reduces the set car-speed V1 so that teh car speed becomes 0 m/s at the work start position P0. Note that the car-speed control processing portion 113 may set acceleration at the deceleration (inclination of a straight line from the set car-speed V1 to the car speed 0 m/s in FIG. 5) on the basis of the magnitude of the set car-speed V1.

When the work vehicle 10 decelerates from the set car-speed V1, and the car speed reaches the threshold value Vth, the drive processing portion 114 engages the planting clutch 5. As a result, power is transmitted to the work machine 14 via the PTO shaft 37. Here, the predetermined time T0 (time lag) is required from when the planting clutch 5 is switched from "OFF" to "ON" until the work machine 14 is driven (the planting operation is started).

Thus, at the point of time when the predetermined time T0 has elapsed since the car speed of the work vehicle 10 reached the threshold value Vth, and the drive processing portion 114 engaged the planting clutch 5, the driving of the work machine 14 is started, and the planting operation is started.

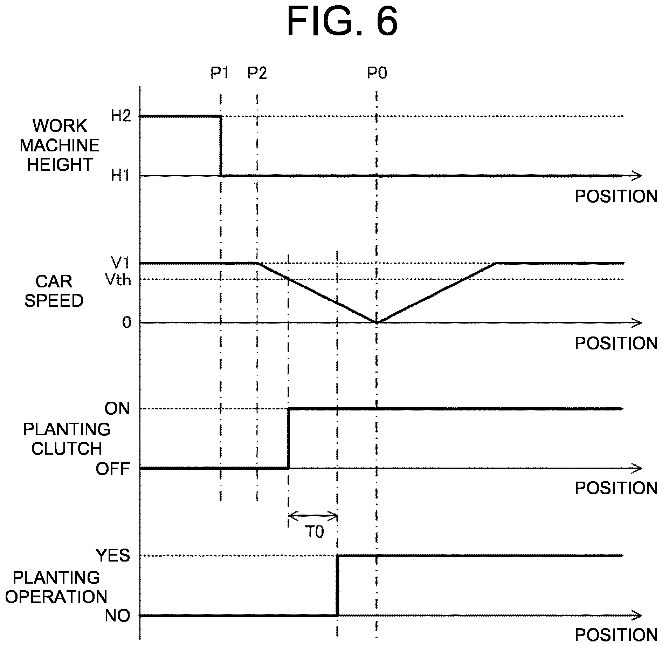

In addition, in the above-described configuration, the timing at which the planting clutch 5 is engaged (the threshold value Vth) is adjusted so that the planting unit 34 reaches the work start position P0, when the predetermined time T0 has elapsed since the planting clutch 5 was switched from "OFF" to "ON" (see FIG. 4D). Here, if the threshold value Vth is set to a large car speed, a slip of the wheels occurs more likely, and the distance for which the work vehicle 10 travels in the predetermined time T0 becomes shorter than an assumed distance and thus, as shown in FIG. 6, the planting operation is likely to be started before the work start position P0. In contrast, if the threshold value Vth is set to a small car speed, a slip of the wheels occurs less likely, and the distances for which the work vehicle 10 travels in the predetermined time T0 becomes closer to the assumed distance and thus, the planting operation can be started at the work start position P0 or in the vicinity of the work start position P0. Therefore, it is desirable that the threshold value Vth is set to a small value (for example, a car speed of approximately 1/3 of the set car-speed V1). As described above, the drive processing portion 114 may set the threshold value Vth on the basis of the set car-speed V1. That is, the drive processing portion 114 may set the threshold value Vth on the basis of at least either one of the set car-speed V1 and the predetermined time T0.

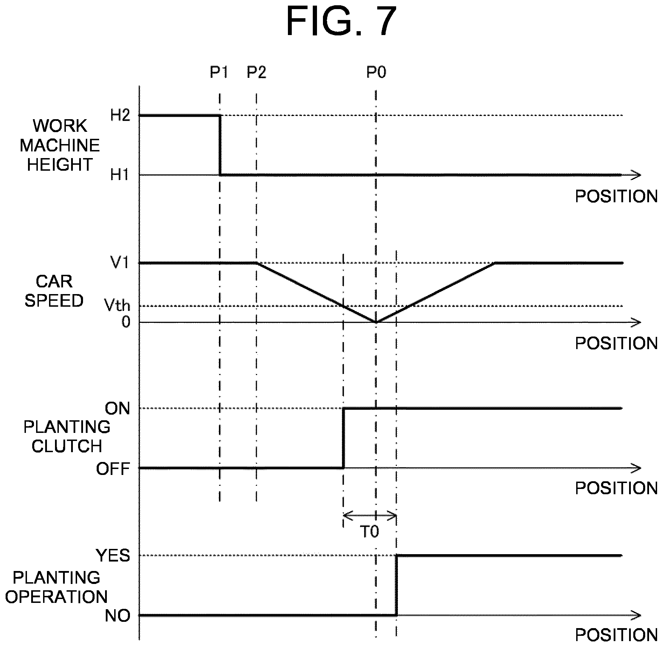

Note that, if the threshold value Vth is too small, the planting unit 34 is likely to be shifted to the advancing direction side from the work start position P0 at a point of time when the predetermined time T0 has elapsed (see FIG. 7) and thus, the threshold value Vth may be set to a value larger than 0 m/s. In addition, if the start of the planting operation on the advancing direction side of the work start position P0 is allowed, the threshold value Vth may be set to approximately 0 m/s.

As described above, in this Embodiment, such a configuration may be adopted that the driving (planting operation) of the work machine 14 is started at the work start position P0 or at a position on the advancing direction side of the work start position P0. As a result, the seedlings can be planted from an appropriate position, and wasteful consumption of the seedlings can be suppressed.

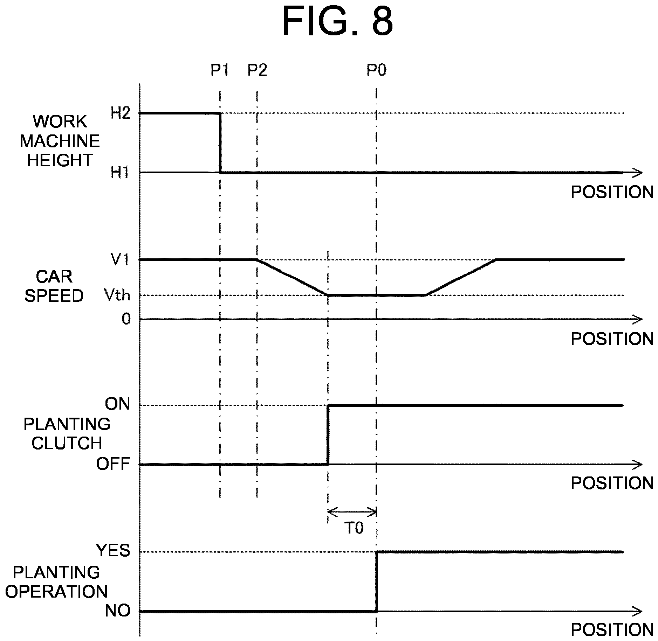

In addition, as another Embodiment, in a case where the car speed becomes 0 m/s at the work start position P0, and the work vehicle 10 stops, the work vehicle 10 may be stopped at the work start position P0 until the predetermined time T0 has elapsed. As a result, the planting operation can be reliably started at the work start position P0. Note that, if the stopped state of the work vehicle 10 becomes long, the work efficiency lowers and thus, an upper limit may be set for the stop time. In addition, for example, such processing may be executed that, when the operator sets a mode giving priority to work accuracy (work-accuracy priority mode) in the operation terminals 20, the work vehicle 10 is stopped at the work start position P0 until the predetermined time T0 has elapsed by providing the stop time, while when the operator sets a mode giving priority to work efficiency (work-efficiency priority mode) in the operation terminal 20, processing of not providing the stop time (traveling is resumed immediately after the stop at the work start position P0 or stop is not allowed at the work start position P0 (see FIG. 8)).

After the planting operation is started, the car-speed control processing portion 113 gradually increases the car speed of the work vehicle 10 until it reaches the set car-speed V1. Note that the car-speed control processing portion 113 may set acceleration at the speed increase (inclination of the straight line from the car speed 0 m/s to the set car-speed V1 in FIG. 5) on the basis of the magnitude of the set car-speed V1. In addition, the car-speed control processing portion 113 may set the acceleration at the time of speed increase to the same acceleration as the acceleration at the time of speed reduction or may set the acceleration at the time of acceleration to different acceleration. As described above, after the planting operation is started, the car-speed control processing portion 113 sets the car speed in a section of a predetermined distance on the advancing direction side from the work start position P0 to be equal to or smaller than the threshold value Vth and, after the work vehicle 10 has traveled the section, increases the car speed to the set car-speed V1 continuously or stepwise (see FIG. 5).

FIG. 8 illustrates another example of the control timing of each of the processing portions. In the example shown in FIG. 8, the work vehicle 10 continues automated traveling without stopping at the work start position P0. Specifically, when the work vehicle 10 continues the automated traveling in the state in which the work machine 14 is lowered to the work position H1 and reaches the position P2 (see FIG. 4C), the car-speed control processing portion 113 gradually reduces the set car-speed V1 for the straight traveling (1.8 m/s, for example) to the threshold value Vth and continues the automated traveling while maintaining the car speed of the threshold value Vth. In addition, at a point of time when the car speed of the work vehicle 10 reaches the threshold value Vth, the drive processing portion 114 engages the planting clutch 5. As a result, at a point of time when the predetermined time T0 has elapsed since the drive processing portion 114 engaged the planting clutch 5, the driving of the work machine 14 is started, and the planting operation is started.

According to the example shown in FIG. 8, since the work vehicle 10 continues traveling without stopping, it is possible to improve work efficiency. Here, in the example shown in FIG. 8, the drive processing portion 114 switches the planting clutch 5 from "OFF" to "ON" at the timing when the car speed reaches the threshold value Vth, but as another Embodiment, the drive processing portion 114 may switch the planting clutch 5 from "OFF" to "ON" after a predetermined time has elapsed since the car speed reached the threshold value Vth. As a result, the car speed of the work vehicle 10 after the planting clutch 5 is engaged is maintained constant and thus, it is possible to suppress variation of the traveling distance due to a slip when the work vehicle 10 travels during the predetermined time T0. Thus, the start position of the planting operation can be easily matched to the work start position P0.

In addition, in the example shown in FIG. 8, after the planting operation is started, the car-speed control processing portion 113 maintains the car speed of the work vehicle 10 at the threshold value Vth only for a predetermined time, and after the predetermined time has elapsed, it gradually increases the speed to the set car-speed V1. As a result, since the speed of the work vehicle 10 is increased after traveling a certain distance while performing the planting operation, the work accuracy and the traveling stability can be improved. As described above, after the planting operation is started, the car-speed control processing portion 113 sets the car speed in a section of a predetermined distance on the advancing direction side from the work start position P0 to the threshold value Vth, and increases the car speed to the set car-speed V1 continuously or stepwise after the work vehicle 10 has traveled the above-described section (see FIG. 8). Note that the lowest car speed is set to the threshold value Vth in the example shown in FIG. 8, but as another Embodiment, the lowest speed may be set to a speed faster than 0 m/s and slower than the threshold value Vth.

In each of the above-described configurations, the vehicle control device 11 may determine the distance from the work start position P0 to the position P2 (the second predetermined distance of the present invention), that is, the position at which the speed reduction of the set car-speed V1 is started, on the basis of the predetermined time T0 (time lag), for example. Specifically, the vehicle control device 11 performs setting such that the longer the predetermined time T0 becomes, the longer the above-described distance (second predetermined distance) becomes and the shorter the predetermined time T0 becomes, the shorter the above-described distance becomes.

### Operation Terminal 20

As shown in FIG. 1, the operation terminal 20 is an information processing device that includes an operation control portion 21, a storage portion 22, an operation display portion 23, a communication portion 24, and the like. The operation terminal 20 may be constituted by a mobile terminal such as a tablet terminal, a smartphone or the like.

The communication portion 24 is a communication interface that connects the operation terminal 20 to the communication network N1 in a wired or wireless manner, and executes data communication in accordance with a predetermined communication protocol with an external device such as one or a plurality of work vehicles 10 via the communication network N1.

The operation display portion 23 is a user interface including a display portion such as a liquid crystal display or an organic EL display, which displays various types of information and an operation portion such as a touch panel, a mouse, or a keyboard, which receives operations. The operator can perform an operation of registering various types of information (work vehicle information, field information, work information and the like, which will be described later) by operating the operation portion on an operation screen displayed on the display portion. For example, the operator performs an operation of registering the field F, which is the work target, in the operation portion.

In addition, the operator may operate the operation portion so as to give a traveling start instruction, a traveling stop instruction or the like to the work vehicle 10. Furthermore, at a place away from the work vehicle 10, the operator may use a traveling trajectory displayed on the operation terminal 20 so as to grasp the traveling state of the work vehicle 10 automatedly traveling in the field F along the target path R.

The storage portion 22 is a non-volatile storage portion such as an HDD, an SSD, or a flash memory that stores various types of information. The storage portion 22 stores a control program for causing the operation control portion 21 to execute various types of processing. For example, the control program is recorded in a computer-readable recording medium such as a flash ROM, an EEPROM, a CD, a DVD or the like in a non-transitory manner and is read by a predetermined reading device (not shown) and is stored in the storage portion 22. Note that the control program may be downloaded from a server (not shown) to the operation terminal 20 via the communication network N1 and stored in the storage portion 22.

In addition, in the storage portion 22, a dedicated application for causing the work vehicle 10 to perform the automated traveling is installed. The operation control portion 21 activates the dedicated application to execute the setting processing of various types of information with regard to the work vehicle 10, the generation processing of the target path R for the work vehicle 10, an automated traveling instruction for the work vehicle 10, and the like.

In addition, the storage portion 22 stores data such as the work vehicle information, which is information with regard to the work vehicle 10, and the target path information, which is information with regard to the target path R. The work vehicle information includes information such as a vehicle number, a model, and the like for each of the work vehicles 10. The vehicle number is identification information of the work vehicle 10. The model is a model of the work vehicle 10.

In addition, the storage portion 22 may store the work vehicle information with regard to one unit of the work vehicle 10 or may store the work vehicle information with regard to a plurality of the work vehicles 10. For example, in a case where a particular operator owns the plurality of work vehicles 10, the storage portion 22 stores the work vehicle information with regard to each of the work vehicles 10.

The target path information includes information such as a path name, a field name, an address, a field size, work time and the like for each of the target paths R. The path name is a path name of the target path R generated in the operation terminal 20. The field name is a name of the field F that is a work target for which the target path R is set.

The address is an address of the field F, and the field size is a size of the field F. The work time is time required for the work vehicle 10 to perform a work in the field F.

In addition, the storage portion 22 may store the target path information with regard to the one target path R or may store the target path information with regard to the plurality of target paths R. For example, in a case where a particular operator generates a plurality of target paths R for the one or a plurality of fields F owned by the operator, the target path information with regard to each of the target paths R is stored in the storage portion 22. Note that one target path R or a plurality of target paths R may be set for one field F.

Note that, as another Embodiment, some or all of the information such as the work vehicle information, the target path information and the like may be stored in a server that is accessible from the operation terminal 20. The operator may perform operations of registering the work vehicle information and the target path information in the server (such as a personal computer, a cloud server or the like, for example).

The operation control portion 21 has control devices such as a CPU, a ROM, a RAM and the like. The CPU is a processor that executes various types of arithmetic processing. The ROM is a non-volatile storage portion that stores, in advance, control programs such as a BIOS and an OS for causing the above-described CPU to execute the various types of arithmetic processing. The RAM is a volatile or non-volatile storage portion that stores various types of information and is used as a temporary storage memory for various types of processing executed by the CPU. And the operation control portion 21 controls the operation terminal 20 by causing the CPU to execute various types of control programs, which are stored in advance in the ROM or the storage portion 22.

As shown in FIG. 1, the operation control portion 21 includes various processing portions such as a setting processing portion 211 and an output processing portion 212. Note that the operation control portion 21 functions as the various types of processing portions by causing the CPU to execute various type of processing in accordance with the control programs. In addition, some or all of the above-described processing portions may be constituted by electronic circuits. Note that the control programs may be programs that cause a plurality of processors to function as the processing portions.

The setting processing portion 211 sets various types of setting information for causing the work vehicle 10 to perform automated traveling. Specifically, the setting processing portion 211 sets information on the work vehicle 10 (hereinafter, referred to as work vehicle information). The setting processing portion 211 sets information such as the type (model) of the work vehicle 10, the position at which the positioning antenna 164 is mounted in the work vehicle 10, the type, size, and shape of the work machine 14, the position of the work machine 14 with respect to the work vehicle 10, the car speed (car speed for straight traveling) and an engine speed of the work vehicle 10 during a work, and the car speed (car speed for turning traveling) and the engine speed of the work vehicle 10 during turning by the operator performing a registration operation in the operation terminal 20.

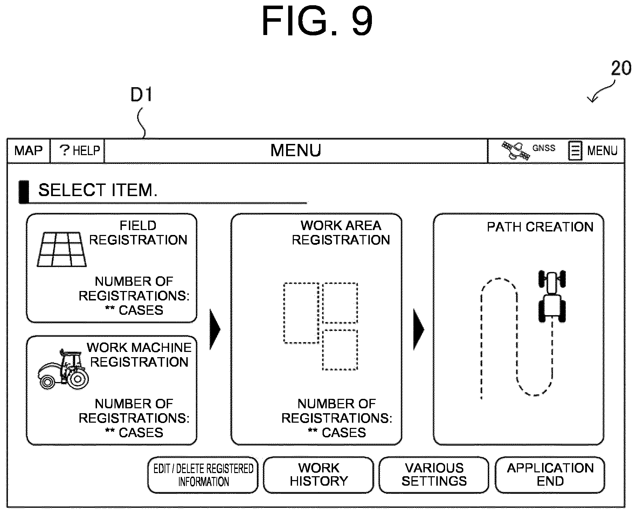

For example, the setting processing portion 211 causes the operation display portion 23 to display a menu screen D1 shown in FIG. 9. The worker selects "Work machine registration" on the menu screen D1 to register work machine information about the work machine 14, for example.

In addition, the setting processing portion 211 sets information about the field F (hereinafter, referred to as field information). The setting processing portion 211 sets information such as the position and the shape of the field F, the traveling start position S at which the automated traveling is started, the traveling end position G at which the automated traveling is ended (see FIG. 3), the work direction and the like by performing an operation of registering the information in the operation terminal 20. For example, the operator selects "field registration" on the menu screen D1 to register the field information.

The information on the position and the shape of the field F can be automatically acquired, for example, by an operator boarding on the work vehicle 10 and driving the work vehicle 10 so as to make a round along the outer periphery of the field F, and recording transition of information on a specific position (for example, the position of the side end part of the work vehicle 10) on the basis of the positioning information of the work vehicle 10 at that time. In addition, the position and the shape of the field F can also be acquired on the basis of a polygon obtained by the worker who operates the operation terminal 20 and specifies a plurality of points on a map in a state in which the map is displayed on the operation terminal 20. The area specified by the acquired position and shape of the field F is an area (traveling area) where the work vehicle 10 can be caused to travel.

In addition, the setting processing portion 211 sets information on how to specifically perform a work (hereinafter referred to as work information). The setting processing portion 211 is configured capable of setting, as work information, presence / absence of a cooperative work between an unmanned work vehicle 10 and a manned work vehicle 10, the number of skips, which is the number of work paths to be skipped in the case where the work vehicle 10 makes a turn in a headland, a width of the headland, a width of a non-cultivated land, and the like. For example, the worker registers the work information by selecting "work area registration" on the menu screen D1.

In addition, the setting processing portion 211 generates the target path R, which is a path for causing the work vehicle 10 to travel in the automated manner, on the basis of each of the setting information. The target path R is, for example, a traveling path from the traveling start position S to a traveling end position G (see FIG. 3). The target path R shown in FIG. 3 includes, in the inner area Fa of the field F, the work path of a straight path where the work vehicle 10 is caused to travel reciprocatingly in parallel and the turning path connecting the work paths to each other, and in the headland area Fb, includes the work path of the straight path where the work vehicle 10 circulates and travels and the turning path connecting the work paths to each other. The setting processing portion 211 generates and stores the target path R of the work vehicle 10 on the basis of each of the setting information. For example, the worker selects "Generate Path" on the menu screen D1 and gives a generation instruction of the target path R. Note that the setting processing portion 211 can generate and store a plurality of the target paths R in accordance with work contents for a single field F.

In addition, the setting processing portion 211 sets the car speed at the time of straight traveling and at the time of turning traveling in accordance with a setting operation of the operator, for example. For example, the operator sets a set car-speed V1 for straight traveling (see FIG. 5 and the like). Note that the setting processing portion 211 may set a lower limit value (lower limit car-speed) and an upper limit value (upper limit car-speed) of the car speed that can be set by the operator. In addition, the setting processing portion 211 may set a lower limit value (lower limit car-speed) and an upper limit value (upper limit car-speed) of the car speed that can be set by the operator with respect to the car speed after deceleration (for example, the threshold value Vth, the car speed equal to or smaller than the threshold value Vth, or the like). As a result, since the operator can set the car speed within the range from the lower limit car-speed to the upper limit car-speed, it is possible to prevent setting of an unexpected car speed.

The output processing portion 212 outputs the path data on the target path R to the work vehicle 10. For example, when the operator selects the desired target path R on the operation screen and gives a work start instruction, the output processing portion 212 outputs the path data on the selected target path R to the work vehicle 10.

The work vehicle 10 is configured such that the path data on the target path R generated in the operation terminal 20 is transferred to the work vehicle 10 and is stored in the storage portion 12, and the work vehicle 10 can travel autonomously along the target path R, while the current position of the work vehicle 10 is detected by the positioning antenna 164.

Note that the current position of the work vehicle 10 may or may not match the position of the positioning antenna 164.

In a case where a predetermined start condition is met, when a work start button is pressed on the operation screen by the operator, and a work start instruction is given, the work vehicle 10 starts automated traveling by the traveling processing portion 111 of the work vehicle 10 and starts the planting operation by the work machine 14. For example, on the conditions that the current position of the work vehicle 10 is within a predetermined distance from the traveling start position S, and the vehicle azimuth is within a predetermined azimuth, the operation control portion 21 allows the work vehicle 10 to travel in the automated manner. Note that the start condition that allows the work vehicle 10 to travel in the automated manner is not limited to the above conditions.

The traveling processing portion 111 of the work vehicle 10 causes the work vehicle 10 to travel in the automated manner from the traveling start position S to the traveling end position G along the target path R acquired from the operation terminal 20.

In addition, when the operation control portion 21 acquires a detection result indicating that an obstacle was detected from the work vehicle 10, the operation terminal 20 may display the position at which the obstacle was detected on the captured image which is captured by a camera.

Note that the operation terminal 20 may be accessible to a website of an agricultural support service (agricultural support site) provided by a server (not shown) via the communication network N1. In this case, when the operation control portion 21 executes a browser program, the operation terminal 20 can function as an operation terminal of the server. And the server includes each of the processing portions described above and executes each processing.

### Automated Traveling Processing

Hereinafter, with reference to FIG. 10, an example of the automated traveling processing executed by the automated traveling system 1 will be described.

Note that the present invention may be considered to be an invention of an automated traveling method of performing one or a plurality of steps included in the above-described automated traveling processing. In addition, one or a plurality of steps included in the automated traveling processing described here may be omitted as appropriate. Note that each step in the automated traveling processing may be executed in a different order within a range which generates the same working effects. In addition, an example in which the vehicle control device 11 executes each step in the automated traveling processing is explained here, but an automated traveling method in which one or a plurality of processors discretely execute each step in the automated traveling processing can be also considered to be another Embodiment.

At Step S1, the vehicle control device 11 determines whether or not the work vehicle 10 is in a state capable of the automated traveling. When the work vehicle 10 satisfies the start condition of the automated traveling at the traveling start position S (see FIG. 3) (S1: Yes), the vehicle control device 11 proceeds the processing to Step S2. The vehicle control device 11 stands by until the work vehicle 10 satisfies the start condition of the automated traveling (S1: No).

At Step S2, the vehicle control device 11 causes the work vehicle 10 to start automated traveling. For example, when the operator gives a traveling start instruction on the operation screen of the operation terminal 20, the operation control portion 21 outputs the traveling start instruction to the work vehicle 10. When the vehicle control device 11 acquires a traveling start instruction from the operation terminal 20, the vehicle control device 11 starts automated traveling of the work vehicle 10. As a result, the work vehicle 10 starts automated traveling along the target path R (see FIG. 3) at the traveling start position S in the field F.

Note that, at the point of time when the automated traveling is started, the position of the work machine 14 is set to the non-work position H2 (see FIG. 5), the planting clutch 5 is set to "OFF", and the car speed of the work vehicle 10 is set to a car speed set in advance (set car-speed V1). Thus, the work vehicle 10 starts the automated traveling in a state in which the work machine 14 is raised (non-driving state) and at the set car-speed V1.

At Step S3, the vehicle control device 11 determines whether or not the work vehicle 10 has reached the position P1 (see FIG. 4B) before the work start position P0 of the work path Ra only by the first predetermined distance. When the vehicle control device 11 determines that the work vehicle 10 has reached the position P1 (S3: Yes), the processing proceeds to Step S4. The vehicle control device 11 stands by until the work vehicle 10 reaches the position P1 (S3: No). The vehicle control device 11 continues the automated traveling in the state in which the work machine 14 is raised (non-driving state) and at the set car-speed V1 until the work vehicle 10 reaches the position P1.

At Step S4, the vehicle control device 11 lowers the work machine 14 to the work position H1 (see FIG. 4B). Specifically, when the work vehicle 10 reaches the position P1, the vehicle control device 11 inputs a control signal to the elevation cylinder 32 and drives the elevation cylinder 32, whereby the work machine 14 is lowered from the non-work position H2 to the work position H1 (see FIG. 5).

Subsequently, at Step S5, the vehicle control device 11 determines whether or not the work vehicle 10 has reached the position P2 (see FIG. 4C) before the work start position P0 only by a second predetermined distance on the work path Ra. When the vehicle control device 11 determines that the work vehicle 10 has reached the position P2 (S5: Yes), the processing proceeds to Step S6. The vehicle control device 11 stands by until the work vehicle 10 reaches the position P2 (S5: No). The vehicle control device 11 continues the automated traveling in a state in which the work machine 14 is lowered and at the set car-speed V1, until the work vehicle 10 reaches the position P2. When the work vehicle 10 travels in a state in which the work machine 14 is lowered, the paddy field can be leveled by the float 36.

At Step S6, the vehicle control device 11 reduces the car speed of the work vehicle 10. Specifically, the vehicle control device 11 reduces the car speed of the work vehicle 10 continuously (steplessly) or stepwise from the set car-speed V1. Note that the vehicle control device 11 may reduce the set car-speed V1 to the car speed 0 m/s (see FIG. 5) or may reduce the set car-speedV1 to a predetermined car speed (for example, the threshold value Vth) (see FIG. 8). In addition, the vehicle control device 11 controls the car speed so that the car speed becomes equal to or smaller than the threshold value Vth at the work start position P0 or so that the work vehicle 10 stops at the work start position P0.

Subsequently, at Step S7, the vehicle control device 11 determines whether or not the car speed of the work vehicle 10 has reached the threshold value Vth. When the vehicle control device 11 determines that the car speed of the work vehicle 10 has reached the threshold value Vth (S7: Yes), the processing proceeds to Step S8. The vehicle control device 11 stands by until the car speed of the work vehicle 10 reaches the threshold value Vth (S7: No). The vehicle control device 11 continues the automated traveling while reducing the car speed until the car speed of the work vehicle 10 reaches the threshold value Vth.

At Step S8, the vehicle control device 11 switches the planting clutch 5 from "OFF" to "ON" (see FIG. 5). For example, the vehicle control device 11 outputs a switching signal for switching the planting clutch 5 from "OFF" to "ON".

Subsequently, at Step S9, the vehicle control device 11 determines whether or not the predetermined time T0 has elapsed. Specifically, the vehicle control device 11 starts measurement of time at the timing when the planting clutch 5 is switched from "OFF" to "ON" and determines that the predetermined time T0 has elapsed when the measured time reaches the predetermined time T0. When the vehicle control device 11 determines that the predetermined time T0 has elapsed (S9: Yes), the processing proceeds to Step S10. The vehicle control device 11 stands by until the predetermined time T0 has elapsed (S9: No). The vehicle control device 11 continues the automated traveling of the work vehicle 10 until the predetermined time T0 has elapsed (see FIG. 5 and FIG. 8).

At Step S10, the vehicle control device 11 causes the planting unit 34 to start the planting operation. As a result, the planting operation is started at the timing when the predetermined time T0 has elapsed since the planting clutch 5 was switched from "OFF" to "ON" (see FIG. 5 and FIG. 8).

Subsequently, at Step S11, the vehicle control device 11 increases the car speed of the work vehicle 10. Specifically, the vehicle control device 11 increases the car speed of the work vehicle 10 to the set car-speed V1 continuously (steplessly) or stepwise (see FIG. 5 and FIG. 8).

Subsequently, at Step S12, the vehicle control device 11 determines whether or not the work vehicle 10 has reached the work end position of the work path Ra. When the vehicle control device 11 determines that the work vehicle 10 has reached the work end position of the work path Ra (S12: Yes), the processing proceeds to Step S13. The vehicle control device 11 continues the automated traveling and the planting work in the work path Ra until the work vehicle 10 reaches the work end position of the work path Ra (S12: No).

At Step S13, the vehicle control device 11 raises the work machine 14 to the non-work position H2. Specifically, when the work vehicle 10 has reached the terminal end of the work path Ra, the vehicle control device 11 switches the planting clutch 5 from "ON" to "OFF" and inputs a control signal to the elevation cylinder 32 so as to drive the elevation cylinder 32, whereby the work machine 14 is raised from the work position H1 to the non-work position H2.

Subsequently, at Step S14, the vehicle control device 11 determines whether or not the work vehicle 10 has reached the traveling end position G (see FIG. 3) in the field F. When the vehicle control device 11 determines that the work vehicle 10 has reached the traveling end position G (S14: Yes), the vehicle control device 11 ends the above-described automated traveling processing. On the other hand, when the vehicle control device 11 determines that the work vehicle 10 has not reached the traveling end position G (S14: No), the vehicle control device 11 proceeds the processing to Step S3 and executes the above-described processing again. Note that, when the work vehicle 10 continues the automated traveling and moves to the subsequent work path Ra, the position of the work machine 14 is set to the non-work position H2, the planting clutch 5 is set to "OFF", and the car speed of the work vehicle 10 is set to a car speed set in advance (set car-speed V1). Thus, the work vehicle 10 continues the automated traveling at the set car-speed V1 with the work machine 14 in the raised state (non-driving state). The vehicle control device 11 repeatedly executes the processing at Steps S3 to S13 until the work vehicle 10 reaches the traveling end position G.

As described above, the automated traveling system 1 according to this Embodiment causes the work vehicle 10 including the work machine 14 movable between the non-work position H2 and the work position H1 to travel in the automated manner along the target path R, causes the work machine 14 to move from the non-work position H2 to the work position H1 at the position P1 before the work start position P0 only by the first predetermined distance in the target path R, reduces the car speed of the work vehicle 10 to a speed slower than the set car-speed V1 at the position P2 before the work start position P0 only by the second predetermined distance, and causes the driving of the work machine 14 to be started at the work start position P0 or a position on the advancing direction side of the work start position P0.

According to the above-described configuration, by reducing the car speed of the work vehicle 10 at a position before the work start position P0, the work vehicle 10 can drive the work machine 14 in a low-speed state or in a stopped state and can start the planting operation at the work start position P0 or at a position on the advancing direction side of the work start position P0. In addition, by reducing the car speed, an influence of a slip of the wheel can be reduced. Thus, since the planting operation can be started at an appropriate position, the work accuracy can be improved.

In addition, by lowering the work machine 14 to the work position at a position before the work start position P0, the balance in the front-rear direction of the work vehicle 10 can be made stable. As a result, since the traveling stability can be improved, an influence of a slip of the wheel can be reduced, and the planting operation can be started at an appropriate position.

In addition, the automated traveling system 1 according to this Embodiment causes the work vehicle 10 to travel in the automated manner along the target path R, reduces the car speed of the work vehicle 10 to a car speed slower than the set car-speed V1 set in advance at the position P1 before the work start position P0 in the target path R only by a predetermined distance, and engages the work clutch (planting clutch 5) that transmits power to the work machine 14, when the car speed after the deceleration reaches the threshold value Vth, thereby starting the operation of the work machine 14 after the predetermined time T0 has elapsed since the above-described point of time.

As described above, by engaging the work clutch after reducing the car speed of the work vehicle 10, it is possible to suppress fluctuation caused by a slip of a wheel in the time lag (predetermined time T0) until the operation of the work machine 14 is started and thus, it is possible to start the planting operation at an appropriate position.

### Other Embodiments

The Embodiment of the present invention is not limited to the Embodiment described above, but may be the Embodiments described below.

As another Embodiment of the present invention, the vehicle control device 11 may set the distance from the work start position P0 to the position P2 (the second predetermined distance of the present invention), that is, the position at which the deceleration of the set car-speed V1 is started in accordance with the operation of the operator. For example, when the operator inputs the above-described distance (second predetermined distance) in the operation terminal 20, the vehicle control device 11 sets the input distance to the deceleration timing of the car speed. Note that the operation terminal 20 or the vehicle control device 11 may set a lower limit value (lower limit distance) and an upper limit value (upper limit distance) of the distance that can be input by the operator. For example, the lower limit value is set in accordance with the predetermined time T0. Note that the input operation of the distance (second predetermined distance) may be allowed for an unspecified number of users, or may be allowed only to a predetermined user having an operation authority.

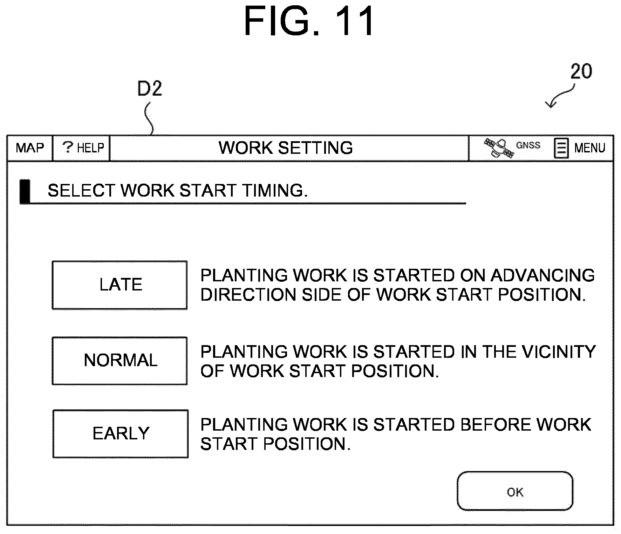

As another Embodiment of the present invention, the vehicle control device 11 may have a configuration in which the operator can set the timing to start the planting operation. For example, in the setting screen D2 shown in FIG. 11, the operation control portion 21 of the operation terminal 20 is caused to display selection buttons of "late", "normal", and "early" for the timing to start the planting operation. For example, when the operator selects "late", the vehicle control device 11 sets the threshold value Vth to a small value (for example, less than approximately 1/3 of the set car-speed V1) so that the start timing of the planting operation is delayed, that is, the planting operation is started on the advancing direction side of the work start position P0. In addition, when the operator selects "early", the vehicle control device 11 sets the threshold value Vth to a large value (for example, in a range of approximately 1/3 to approximately 2/3 of the set car-speed V1) so that the start timing of the planting operation becomes early, that is, the planting operation is started before the work start position P0. In addition, when the operator selects "normal", the vehicle control device 11 sets the threshold value Vth to, for example, approximately 1/3 of the set car-speed V1 so that the planting operation is started close to the work start position P0. As another Embodiment, the operator may be capable of inputting the threshold value Vth. For example, the threshold value Vth (for example, 0.6 m/s) corresponding to the above-described "normal" may be displayed on the setting screen as a default value, and the operator may change the default value on the setting screen.

As another Embodiment of the present invention, when the operator sets a mode with priority to work accuracy (work-accuracy priority mode) in the operation terminal 20, the vehicle control device 11 may set the threshold value Vth corresponding to the above-described "late" or "normal" for the timing of starting the planting operation, and when the operator sets a mode with priority to work efficiency (work-efficiency priority mode) in the operation terminal 20, the vehicle control device 11 may set the threshold value Vth corresponding to the above-described "early" for the timing of starting the planting operation.

In the above-described Embodiment, the single work vehicle 10 corresponds to the automated traveling system according to the present invention, but the automated traveling system according to the present invention may be configured to include the work vehicle 10 and the operation terminal 20. In addition, each function of the vehicle control device 11 may be included in a server that can communicate with the work vehicle 10.

### Supplementary Notes of Invention

Hereinafter, a summary of the invention extracted from the Embodiment will be described as supplementary notes. Note that each of the configurations and processing functions described in the following supplementary notes may be selected and combined arbitrarily.

### Supplementary Note 1

An automated traveling method including:
causing a work vehicle including a work machine movable between a non-work position and a work position to travel in an automated manner along a target path;
moving the work machine from the non-work position to the work position at a position before a work start position only by a first predetermined distance on the target path;
reducing a car speed of the work vehicle to a car speed slower than a set car-speed set in advance at a position before the work start position only by a second predetermined distance; and
starting driving of the work machine at the work start position or a position on an advancing direction side of the work start position.

### Supplementary Note 2

The automated traveling method described in Supplementary Note 1, in which
the work machine is provided in the work vehicle via a work clutch that transmits power to the work machine; and
by engaging the work clutch at a first point of time at which the car speed after deceleration reaches a threshold value, driving of the work machine is started after a predetermined time elapses from the first point of time.

### Supplementary Note 3

The automated traveling method described in Supplementary Note 2, in which
the threshold value is set on the basis of the set car-speed.

### Supplementary Note 4

The automated traveling method described in Supplementary Note 2 or 3, in which
the predetermined time includes a structural delay time from when the work clutch is engaged until driving of the work machine is started; and
the threshold value is set on the basis of at least either one of the set car-speed and the predetermined time.

### Supplementary Note 5

The automated traveling method described in any one of Supplementary Notes 1 to 4, in which
the first predetermined distance is set to a distance longer than the second predetermined distance.

### Supplementary Note 6

The automated traveling method described in any one of Supplementary Notes 2 to 5, in which
control is executed such that the car speed becomes equal to or smaller than the threshold value at the work start position or the work vehicle stops at the work start position.

### Supplementary Note 7

The automated traveling method described in any one of Supplementary Notes 2 to 6, in which
after the driving of the work machine is started, the car speed in a section of a predetermined distance on an advancing direction side from the work start position is set equal to or smaller than the threshold value; and
after the work vehicle traveled the section, the car speed is increased to the set car-speed continuously or stepwise.

### Supplementary Note 8

The automated traveling method described in Supplementary Note 7, in which
the set car-speed is set in accordance with a setting operation by a user within a range from a lower-limit car speed to an upper-limit car speed.

### Supplementary Note 9

The automated traveling method described in any one of Supplementary Notes 1 to 8, in which
the first predetermined distance is set in accordance with a setting operation by a user within a range from a lower-limit distance to an upper limit distance.

### Supplementary Note 10

The automated traveling method described in any one of Supplementary Notes 1 to 9, in which
the car speed after deceleration is set in accordance with a setting operation by a user within a range from a lower-limit car speed to an upper-limit car speed.

### REFERENCE SIGNS LIST

1 Automated traveling system
10 Work vehicle
11 Vehicle control device
12 Storage portion
13 Vehicle-body portion
14 Work machine
15 Communication portion
16 Positioning unit
17 Obstacle detection portion
20 Operation terminal
21 Operation control portion
34 Planting unit
37 PTO shaft
5 Planting clutch (work clutch)
111 Traveling processing portion
112 Elevation processing portion
113 Car-speed control processing portion
114 Drive processing portion
D1 Menu screen
D2 Setting screen
F Field
S Traveling start position
G Traveling end position
H1 Work position
H2 Non-work position
P0 Work start position
R Target path
T0 Predetermined time
V1 Set car-speed
Vth Threshold value

## Claims

1. An automated traveling method comprising:
causing a work vehicle including a work machine movable between a non-work position and a work position to travel in an automated manner along a target path;
moving the work machine from the non-work position to the work position at a position before a work start position only by a first predetermined distance on the target path;
reducing a car speed of the work vehicle to a car speed slower than a set car-speed set in advance at a position before the work start position only by a second predetermined distance; and
starting driving of the work machine at the work start position or a position on an advancing direction side of the work start position.

2. The automated traveling method according to claim 1, wherein
the work machine is provided in the work vehicle via a work clutch that transmits power to the work machine; and
by engaging the work clutch at a first point of time at which the car speed after deceleration reaches a threshold value, driving of the work machine is started after a predetermined time elapses from the first time point.

3. The automated traveling method according to claim 2, wherein
the threshold value is set on the basis of the set car-speed or the predetermined time.

4. The automated traveling method according to claim 2, wherein
the predetermined time includes a structural delay time from when the work clutch is engaged until driving of the work machine is started; and
the threshold value is set on the basis of at least either one of the set car-speed and the predetermined time.

5. The automated traveling method according to claim 1, wherein
the first predetermined distance is set to a distance longer than the second predetermined distance.

6. The automated traveling method according to any one of claims 2 to 4, wherein
control is executed such that the car speed becomes equal to or smaller than the threshold value at the work start position or the work vehicle stops at the work start position.

7. The automated traveling method according to any one of claims 2 to 4, wherein
after the driving of the work machine is started, the car speed in a section of a predetermined distance on an advancing direction side from the work start position is set equal to or smaller than the threshold value; and
after the work vehicle traveled the section, the car speed is increased to the set car-speed continuously or in a stepwise manner.

8. The automated traveling method according to claim 7, wherein
the set car-speed is set in accordance with a setting operation by a user within a range from a lower-limit car speed to an upper-limit car speed.

9. The automated traveling method according to any one of claims 1 to 5, wherein
the first predetermined distance is set in accordance with a setting operation by a user within a range from a lower-limit distance to an upper limit distance.

10. The automated traveling method according to any one of claims 1 to 5, wherein
the car speed after deceleration is set in accordance with a setting operation by a user within a range from a lower-limit car speed to an upper-limit car speed.

11. An automated traveling method, comprising:
causing a work vehicle including a work machine movable between a non-work position and a work position to travel in an automated manner along a target path;
reducing a car speed of the work vehicle to a car speed slower than a set car-speed set in advance at a position before a work start position only by a predetermined distance on the target path; and
by engaging a work clutch that transmits power to the work machine at a point of time when the car speed after the deceleration reaches a threshold value, causing an operation of the work machine to be started after a predetermined time elapses from the point of time.

12. An automated traveling program for causing one or a plurality of processors to execute:
causing a work vehicle including a work machine movable between a non-work position and a work position to travel in an automated manner along a target path;
moving the work machine from the non-work position to the work position at a position before a work start position only by a first predetermined distance on the target path;
reducing a car speed of the work vehicle to a car speed slower than a set car-speed set in advance at a position before the work start position only by a second predetermined distance; and
starting driving of the work machine at the work start position or a position on an advancing direction side of the work start position.

13. An automated traveling system comprising:
a traveling processing portion which causes a work vehicle including a work machine movable between a non-work position and a work position to travel in an automated manner along a target path;
an elevation processing portion which moves the work machine from the non-work position to the work position at a position before a work start position only by a first predetermined distance on the target path;
a car-speed control processing portion which reduces a car speed of the work vehicle to a car speed slower than a set car-speed set in advance at a position before the work start position only by a second predetermined distance; and
a drive processing portion which starts driving of the work machine at the work start position or a position on an advancing direction side of the work start.
